# EUROPEAN PATENT APPLICATION

(11) **EP 4 737 189 A1**
(43) Date of publication of application: **06.05.2026**
(21) Application number: 25204625.5
(22) Date of filing: 25.09.2025
(51) Int. Cl.: B60L 3/12, B60L 15/20, B60L 50/10, B60L 50/16, B60L 53/14, B60L 58/13, B60K 6/46, B60K 6/48, B60W 20/12, B60W 20/13, B60W 50/00, G08G 1/0968

(54) **SYSTEMS AND METHODS FOR MAXIMIZING ENERGY STORAGE ON A VEHICLE WITH INFRASTRUCTURE LIMITATIONS**

(30) Priority: 26.09.2024 US 202463699319 P; 23.09.2025 US 202519336913
(71) Applicant: Cummins, Inc., Columbus, Indiana 47201 (US)
(72) Inventor: LIGHT-HOLETS, Jennifer, Greenwood, 46143 (US); KOLHOUSE, Steven, Columbus, 47201 (US)
(74) Representative: Cleveland Scott York

(57) **Abstract**

A vehicle includes a battery (110), one or more fuel tanks (125), and a controller (140). The controller (140) performs operations including: receiving data indicative of a location of a refueling station relative to a current location of the vehicle; receiving data indicative of a state of charge of the battery (110); receiving data indicative of a fuel level of each fuel tank (125); determining an amount of energy to arrive at the refueling station from the current location; based on the location of the refueling station, the state of charge of the battery (110), the fuel level of at least one of the one or more fuel tanks (125), and the determined amount of energy, selecting at least one fuel tank (125) to refill; and preconditioning the selected at least one fuel tank (125) by converting fuel from the selected at least one fuel tank (125) from a first form of energy to a second form of energy.

## Description

### CROSS REFERENCE TO RELATED APPLICATION

The present application claims the benefit of and priority to U.S. Provisional Patent Application No. 63/699,319, titled "Systems and Methods for Maximizing Energy Storage on a Vehicle with Infrastructure Limitations," filed September 26, 2024, which is incorporated herein by reference in its entirety and for all purposes.

### TECHNICAL FIELD

The present disclosure relates to systems and methods for refueling based on infrastructure limitations.

### BACKGROUND

Internal combustion engines may be fueled by a variety of types of fuel (e.g., natural gas, gasoline, hydrogen, etc.). Infrastructure limitations may affect the availability of refueling stations in various locations.

### SUMMARY

One embodiment relates to a vehicle. The vehicle includes: a battery; one or more fuel tanks; and a controller including a memory with instructions stored thereon that, when executed by one or more processors, cause the one or more processors to perform operations. The operations may include: receiving data indicative of a location of a refueling station relative to a current location of the vehicle; receiving data indicative of a state of charge of the battery; receiving data indicative of a fuel level of each fuel tank of the one or more fuel tanks; determining an amount of energy to be utilized to arrive at the refueling station from the current location of the vehicle; based on the location of the refueling station, the state of charge of the battery, the fuel level of at least one of the one or more fuel tanks, and the determined amount of energy, selecting at least one fuel tank of the one or more fuel tanks to refill; and preconditioning the selected at least one fuel tank. Preconditioning the selected at least one fuel tank may include converting fuel from the selected at least one fuel tank from a first form of energy to a second form of energy.

Another embodiment relates to a vehicle. The vehicle includes a battery; one or more fuel tanks; and a controller comprising a memory with instructions stored thereon that, when executed by one or more processors, cause the one or more processors to perform operations. The operations may include: receiving data indicative of a location of a refueling station relative to a current location of the vehicle; receiving one or more operating conditions of the vehicle; and temporarily increasing an upper limit of the state of charge of the battery based on the at least one of the one or more operating conditions of the vehicle.

Another embodiment relates to a method. The method includes receiving, by one or more processors, data indicative of a location of a refueling station relative to a current location of a vehicle, receiving, by the one or more processors, data indicative of a state of charge of a battery of the vehicle, receiving, by the one or more processors, data indicative of a fuel level of one or more fuel tanks of the vehicle, determining, by the one or more processors, an amount of energy to be utilized to arrive at the refueling station from the current location of the vehicle, based on the location of the refueling station, the state of charge of the battery, the fuel level of at least one of the one or more fuel tanks, and the determined amount of energy, selecting, by the one or more processors, at least one fuel tank of the one or more fuel tanks to precondition, preconditioning, by the one or more processors, the selected at least one fuel tank, wherein preconditioning the selected at least one fuel tank includes converting fuel from the selected at least one fuel tank from a first form of energy to a second form of energy, and communicating, by the one or more processors, instructions to replace the selected at least one fuel tank with a new fuel tank having a fuel level being at or above a predefined threshold level.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE DRAWINGS

FIG. 1 is a block diagram of a system for use in a vehicle, according to an example embodiment.
FIG. 2 is a block diagram of a controller of the vehicle of FIG. 1, according to an example embodiment.
FIG. 3 is a flow diagram of a method of controlling the vehicle of FIG. 1, according to an example embodiment.
FIG. 4 is a flow diagram of a method of controlling a state of charge of a battery of the vehicle of FIG. 1, according to an example embodiment.

### DETAILED DESCRIPTION

Following below are more detailed descriptions of various concepts related to, and implementations of, methods, apparatuses, computer-readable media, and systems for preconditioning a fueling system prior to arrival at a refueling station to increase or maximize energy storage of the vehicle. In some embodiments, one or more controls may be used to determine that a distance between a location of a vehicle and a location of a refueling station, a state of charge (SOC) of a battery of the vehicle, and a fuel level of one or more fuel tanks of the vehicle indicate that fuel stored in one of the fuel tanks should be converted to increase or maximize energy storage. For example, the fuel may be converted into electrical energy to fully charge the battery of the vehicle.

Before turning to the Figures, which illustrate certain example embodiments in detail, it should be understood that the present disclosure is not limited to the details or methodology set forth in the description or illustrated in the Figures. It should also be understood that the terminology used herein is for the purpose of description only and should not be regarded as limiting.

Technically and beneficially, the systems, methods, computer-readable media, and apparatuses described herein according to various embodiments provide improvement or maximization of energy storage on a vehicle, specifically in situations in which infrastructure limitations exist. As described herein, one or more fuel tanks of a hybrid vehicle may be preconditioned for refueling prior to arrival at a refueling station. Preconditioning may include depleting the fuel tanks of fuel so that a reduced or minimum amount of fuel is lost during the refueling process and a maximum amount of energy is stored on the vehicle upon departure from the refueling station. Converting fuel into electrical energy to increase a state of charge of a battery of the vehicle may allow maximum energy (e.g., fuel and power) storage on the vehicle.

In various situations, it may be difficult for a vehicle to refuel. For example, for certain types of fuels, locations along a route of the vehicle may lack infrastructure so that fueling parameters are not achieved by the vehicle. Further, for some vehicle, it may be difficult to access infrastructure stations, thus limiting availability and/or accessibility of the vehicle to refuel. As such, various vehicle may travel extended distances without being able to refuel, which may be dangerous or cause potential problems. For example, a vehicle may run out of fuel part of the way through a route with no ability to refuel. The system according to various embodiments identifies refueling opportunities, thereby increasing or maximizing energy storage, such that the vehicle is able to continue traveling when refueling opportunities are limited.

Further, in some situations a vehicle with multiple fuel tanks may arrive at a refueling station with the tanks having varying fuel levels. For example, some fuel tanks may be almost or substantially full, some fuel tanks may be partially (e.g., halfway, three-quarters, one-third, etc.) full, and some fuel tanks may be almost or substantially empty. In situations in which an almost full or partially full fuel tank is exchanged at a refueling station for a full fuel tank, the remaining fuel may be effectively "donated" or "lost." That is, the remaining fuel has been previously purchased by, for example, an owner of the vehicle, and is not being utilized by the vehicle, but the cost of the unused fuel is still lost to the purchaser of the fuel. This may be costly to a driver, an owner of the vehicle, a company owning the vehicle, etc.

Technically and beneficially, the systems and methods described in various embodiments herein allow for improvement or maximization of energy storage on a vehicle to increase a range of the vehicle, thus reducing a likelihood of the vehicle being unable to reach a refueling station, and reduction of costs incurred by wasting unused fuel. As stated above, the systems and methods of various embodiments described herein include preconditioning a fuel tank of a vehicle prior to refueling. Preconditioning may include converting fuel into electrical energy to increase a state of charge of the battery. The state of charge of the battery may be increased to a full or maximum limit, thus providing the vehicle with a maximum range that can be provided by battery-powered operations. This conversion also allows a fuel tank to become substantially empty upon arrival to a refueling station. Thus, reduced amounts of fuel are lost or "donated" when the empty fuel tank is switched with a full tank (e.g., the vehicle is receiving a maximum net amount of fuel). Multiple fuel tanks may be preconditioned and emptied prior to refueling. Thus, one or more fuel tanks may be filled at the refueling station, allowing for at least a full battery state of charge (SOC) and at least one full fuel tank.

As utilized herein, the term "estimating" and like terms are used to refer to determining an approximate value based on data (e.g., sensor data, historical sensor data, real-time sensor data, etc.), which may be close but not necessarily exactly the actual value. In some embodiments, estimating a current or future value can be performed using one or more models (e.g., statistical models, artificial intelligence models, machine learning models, etc.). For example, estimating range of a battery of an electric powertrain can include using data, such as sensor data, with a model to determine the range value.

As used herein, the term "range" and like terms are used to refer a maximum distance a vehicle can travel before running out of fuel and/or charge. The range of the vehicle may be an estimated value. The range may be expressed in distance, such as a number of remaining miles, kilometers, etc., time, such as a number of remaining traveling hours, and/or a percentage of distance and/or time remaining until a refuel or recharge is needed.

As utilized herein, the term "measuring" and like terms are used to refer to determining an approximate value based on detecting or receiving information regarding the measured value/parameter (e.g., using a sensor). The measured value may be closer to the actual value (e.g., compared to estimating the value) but not necessarily exactly the actual value of the parameter value.

As described herein, a powertrain system may include an engine. The engine may be an internal combustion engine (ICE) configured to combust fuel. For example, the internal combustion engine may be configured to combust hydrogen, natural gas, gasoline, diesel, biodiesel, propane etc. It should be understood that the internal combustion engine may combust any type of fuel. During operation of the engine, a control system (e.g., a controller) may control operation of the powertrain and/or one or more components or systems thereof.

As used herein the terms "controlling," "adjusting," "changing" and similar terms are used interchangeably to mean changing or modifying an operational parameter by generating and/or transmitting a control signal (e.g., by a controller, a computing system, etc.) to one or more systems, sensors, and/or components, such that the operation of the system, sensor, and/or component changes. Such adjustments may be iterative, in which multiple adjustment are made until a desired output is reached. For example, a desired output may include a desired operational characteristic, a target and/or threshold value for an operational characteristic (e.g., a target emissions output, a target engine torque output, a target speed, a target fuel injection timing and/or quality, etc.). In some embodiments, the adjustment may be made based on a statistical model and/or a machine learning model (e.g., artificial intelligence). In these embodiments, the adjustments are not necessarily made in a pre-determined manner. Rather, the adjustments may become unique for the individual piece of equipment (engine, vehicle, operating environment, etc.).

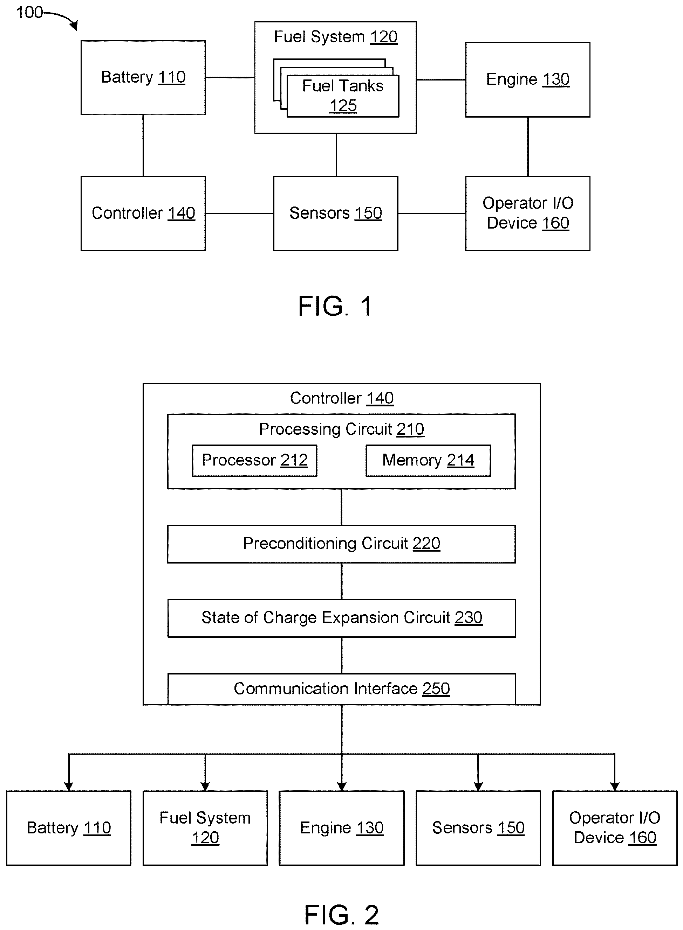

Now referring to FIG. 1, a block diagram of a system 100 is shown, according to an example embodiment. The system 100 may be embodied in vehicle, which may be configured as an on-road or an off-road (e.g., front end loaders, bulldozers, etc.) including, but not limited to, line-haul trucks, mid-range trucks (e.g., pick-up trucks), cars (e.g., sedans), and any other type of vehicle. In other embodiments, the system 100, or portions thereof, may be embodied in non-vehicle applications, such as in generator sets. It should be also understood that in other embodiments, more, different, and/or fewer components of the system 100 may be included in the system 100 without departing from the spirit and scope of the present disclosure.

In some embodiments, the system 100 may be any type of on-road or off-road vehicle including, but not limited to, wheel-loaders, fork-lift trucks, line-haul trucks, mid-range trucks (e.g., pick-up truck, etc.), sedans, coupes, tanks, airplanes, boats, and any other type of vehicle. All such variations are intended to fall within the scope of the present disclosure.

As shown in FIG. 1, the system 100 includes a battery, a fuel system 120, an engine 130, a controller 140 (as shown in FIG. 2), sensors 150, and an operator I/O device 160. Each of the components of the system 100 are communicably coupled with each other. The vehicle may be structured as a hybrid vehicle, such as a hybrid vehicle that includes one or more electric motors and one or more internal combustion engines.

In the example shown, the system 100 is driven, at least partly, by an internal combustion engine (ICE), shown as the engine 130. The ICE may consume fuel (e.g., hydrogen, diesel, gasoline, natural gas, etc.) to generate power. According to one embodiment, the engine 130 is structured as a compression-ignition internal combustion engine that utilizes hydrogen fuel. However, in various alternate embodiments, the engine 130 may be structured as any other type of engine (e.g., spark-ignition) that utilizes any type of fuel (e.g., gasoline, natural gas, diesel, etc.).

The engine 130 may power and/or propel the vehicle embodying the system 100 via a powertrain. The powertrain may be an electric/hybrid powertrain. In some embodiments, the powertrain is a hybrid powertrain having a combination of the internal combustion engine and at least one electric machine (not shown) coupled to at least one battery 110. For example, the system 100 may include an electric machine (e.g., a motor, a motor generator, an electric starter, etc.) that is coupled to the engine 130 via a shaft (e.g., an output shaft, a drive shaft, a crankshaft, etc.). In some embodiments, the system 100 may be configured as a mild-hybrid powertrain, a parallel hybrid powertrain, a series hybrid powertrain, or a series-parallel powertrain.

In various embodiments, the powertrain may include one or more batteries 110. The battery 110 may be used to power the system 100 (e.g., an electric machine). The battery 110 may be coupled to the electric machine of the hybrid engine system. The fuel system 120 is configured to provide the electrical energy to the electric machine from the battery 110. In some embodiments, the fuel system 120 is configured to provide electrical energy to the battery 110 from the electric machine and/or from an alternator coupled to the engine 130.

In various embodiments, the battery 110 may have specific charging thresholds associated with an extent to which the battery is charged and/or depleted. For example, the battery 110 having a "full" charge may mean that the battery 110 is charged within a certain range and has a stored charge at or above a predefined threshold value. For example, a battery being at or above 98% may constitute a "fully charged" battery. Further, the battery 110 being "empty" or depleted may mean that the battery 110 has depleted to within a certain range and has a stored charge at or below a predefined threshold value. For example, the batter having 3% or less battery life remaining may constitute a "dead" or depleted battery.

In various embodiments, the battery 110 may have a plurality of associated SOC ranges. For example, during standard operation, the battery 110 may have an upper SOC limit of 95% and a lower SOC limit of 5%. In various embodiments, during an altered operation, the battery 110 may have an increased SOC range. For example, during an altered operation, the battery 110 may have an upper state of charge limit of 97% and/or a lower SOC limit of 3%.

In some arrangements, the controller 140 includes hardware, software, or any combination of hardware and software structured to facilitate operations of the components of the system 100. For example, and as shown in FIG. 1, the controller 140 includes a preconditioning circuit 220 that includes any combination of hardware and software for making computer-generated predictions or estimates based on one or more statistical models. In some embodiments, the controller 140 includes any combination of hardware and software including specialized processing circuits, applications, executables, and the like for controlling, managing, or facilitating the operation of the other computing systems of the system 100 including the fuel system 120. For example, the controller 140 includes a preconditioning circuit for controlling the operation of the fuel system 120.

The fuel system 120 includes storage tanks, conduits, pumps, filters, and other components that is configured to route a fluid, such as hydrogen fuel, to the engine 130. The fuel system 120 is coupled to the engine 130. The fuel system 120 is configured to provide the fuel to the engine 130. The fuel system 120 is configured to receive the fuel (e.g., from a refueling station, from a removably coupled storage tank, etc.). The fuel may be, for example, hydrogen, diesel, gasoline, natural gas, etc.

In some embodiments, the fuel system 120 includes one or more fuel tanks 125 configured to store the fuel. In some embodiments, the one or more fuel tanks 125 are removable such that each fuel tank may be removed and/or replaced. For example, an empty fuel tank 125 may be replaced with a filled or partially filled fuel tank. In some embodiments, the fuel system 120 may selectively provide the fuel to the engine 130 from one or more of the fuel tanks 125. For example, the fuel system 120 may provide the fuel to the engine 130 from a first fuel tank 125 of the one or more fuel tanks and subsequently provide fuel to the engine 130 from a second fuel tank 125 of the one or more fuel tanks.

In various embodiments, the fuel tanks 125 may store a plurality of types of fuel for use by the engine 130. For example, a first fuel tank 125 may store hydrogen fuel and a second fuel tank 125 of the system 100 may store diesel fuel. In various embodiments, a fuel tank may be "full" or "filled" when the fuel level is at or above a predefined threshold value. Further, the fuel tank may be considered "empty" or needing to be refilled when the fuel level is at or below a predefined threshold value.

In some embodiments, the controller 140 is coupled, and particularly communicably coupled, to one or more of the sensors 150 associated with the system 100. Accordingly, the controller 140 is structured to receive data from one or more of the sensors 150 and provide instructions/information to the one or more sensors. The received data may be used by the controller 140 to control one or more components in the system 100 as described herein.

As shown, the one or more sensors 150 are included in the system 100. In some embodiments the number, placement, and type of sensors 150 may vary. The sensors 150 may be gas constituent sensors (e.g., NOₓ sensors, oxygen sensors, H₂O/humidity sensors, hydrogen sensors, etc.), temperature sensors, particulate matter (PM) sensors, flow rate sensors (e.g., mass flow rate sensors, volumetric flow rate sensors, etc.), other exhaust gas emissions constituent sensors, pressure sensors, some combination thereof, etc. In an example embodiment, the sensors 150 are configured as temperature sensors configured to acquire data regarding a temperature of a fluid, such as the fuel system 120, air at or proximate the engine 130, or other fluid in the system 100 and/or acquire data regarding a temperature of a component of the system 100.

Additional sensors may be also included with the system 100. The sensors may include engine-related sensors (e.g., torque sensors, speed sensors, pressure sensors, flowrate sensors, temperature sensors, etc.). The sensors 150 may further include sensors associated with other components of the vehicle, such as the fuel system 120. For example, a sensor 150 may be positioned at or proximate the fuel system 120, one or more fuel tanks 125, etc. and may be configured to receive an indication of and/or data indicative of a fuel level or value. Further, a sensor 150 may be configured as a SOC sensor and may be positioned at or proximate the battery 110. The SOC sensor may be configured to receive a state of charge (SOC) value or level of the battery 110. In some embodiments, the SOC sensor receives data indicative of a SOC value or level of the battery 110. One or more sensors 150 may further be configured to receive location data of the system 100, GPS coordinates, and/or other location data of the system 100.

The sensors 150 may be real or virtual (i.e., a non-physical sensor that is structured as program logic in the controller 140 that makes various estimations or determinations). For example, an engine speed sensor may be a real or virtual sensor arranged to measure or otherwise acquire data, values, or information indicative of a speed of the engine 130 (typically expressed in revolutions-per-minute). The sensor is coupled to the engine (when structured as a real sensor) and is structured to send a signal to the controller 140 indicative of the speed of the engine 130. When structured as a virtual sensor, at least one input may be used by the controller 140 in an algorithm, model, lookup table, etc. to determine or estimate a parameter of the engine (e.g., power output, etc.). Any of the sensors 150 described herein may be real or virtual.

The operator input/output (I/O) 160 device may be coupled to the controller 140, such that information may be exchanged between the controller 140 and the I/O device 160, where the information may relate to one or more components of FIG. 1 or determinations (described below) of the controller 140. The operator I/O device 160 enables an operator of the system 100 to communicate with the controller 140 and one or more components of the system 100 of FIG. 1. For example, the operator I/O device 160 may include, but is not limited to, an interactive display, a touchscreen device, one or more buttons and switches, voice command receivers, etc.

In this way, the operator I/O device 160 may provide one or more indications or notifications to an operator, such as a malfunction indicator lamp (MIL), etc. Additionally, the I/O device 160 may include a port that enables the controller 140 to connect or couple to a scan tool, such as a laser scanner, a camera, or other suitable scan tool. The scan tool may be configured to scan a code (e.g., a bar code, a QR code, etc.) and provide the scanned code to the controller 140. In this way, the controller 140 may receive information regarding a scanned code.

The controller 140 is structured to control, at least partly, the operation of the system 100 and associated sub-systems, such as the engine 130 and the operator I/O device 160. Communication between and among the components may be via any number of wired or wireless connections. For example, a wired connection may include a serial cable, a fiber optic cable, a CAT5 cable, or any other form of wired connection. In comparison, a wireless connection may include the Internet, Wi-Fi, cellular, radio, etc. In one embodiment, a controller area network (CAN) bus provides the exchange of signals, information, and/or data. The CAN bus includes any number of wired and wireless connections. Because the controller 140 is communicably coupled to the systems and components of FIG. 1, the controller 140 is structured to receive data from one or more of the components shown in FIG. 1.

As the components of FIG. 1 are shown to be embodied in the system 100, the controller 140 may be structured as one or more electronic control units (ECUs), such as one or more microcontrollers. The controller 140 may be separate from or included with at least one of a transmission control unit, an exhaust aftertreatment control unit, a powertrain control module, an engine control unit, an engine control module, etc.

Referring now to FIG. 2, the controller 140 of FIG. 1 is shown, according to an example embodiment. As shown, the controller 140 includes at least one processing circuit 210 having at least one processor 212 and at least one memory device 214, a preconditioning circuit 220, a state of charge (SOC) expansion circuit 230, and a communications interface 250. The controller 140 is structured to control operation of the other components of the system 100. In some embodiments, the controller 140 may control operation of the fuel system 120, the engine 130, and/or other components of the system 100 to achieve a desired or target well to wheel emissions value. For example, the controller 140 may operate one or more valves, motors, actuators, heaters, or other suitable devices to achieve the target well to wheel emissions value.

In one configuration, the controller 140 is embodied as machine or computer-readable media storing instructions that are executable by a processor, such as processor 212. As described herein and amongst other uses, the machine-readable media facilitates performance of certain operations to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data). The computer readable media instructions may include code, which may be written in any programming language including, but not limited to, Java or the like and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the controller 140 is embodied as hardware units, such as one or more electronic control units. As such, the controller 140 may be embodied as one or more circuitry components including, but not limited to, processing circuitry, network interfaces, peripheral devices, input devices, output devices, sensors, etc. In some embodiments, the controller 140 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the controller 140 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on.

The controller 140 may also include or be programmable hardware devices such as field programmable gate arrays, programmable array logic, programmable logic devices or the like. The powertrain control circuit may include one or more memory devices for storing instructions that are executable by the processor(s) of the controller 140. The one or more memory devices and processor(s) may have the same definition as provided below with respect to the memory device 214 and processor 212. In some hardware unit configurations, the controller 140 may be geographically dispersed throughout separate locations in the system 100. Alternatively, and as shown, the controller 140 may be embodied in or within a single unit/housing, which is shown as the controller 140.

In the example shown, the controller 140 includes the at least one processing circuit 210 having the at least one processor 212 and the at least one memory device 214. The processing circuit 210 may be structured or configured to execute or implement the instructions, commands, and/or control processes described herein with respect to the preconditioning circuit 220 and/or the SOC expansion circuit 230. The depicted configuration represents the preconditioning circuit 220 and the SOC expansion circuit 230 as being embodied as machine or computer-readable media storing instructions (which may be stored by the memory device 214). However, as mentioned above, this illustration is not meant to be limiting as the present disclosure contemplates other embodiments where the each of the preconditioning circuit 220 and the SOC expansion circuit 230 is configured as a hardware unit. All such combinations and variations are intended to fall within the scope of the present disclosure.

The processor 212 may be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor may be a microprocessor, a group of processors, etc. A processor also may be implemented as a combination of computing devices, such as a combination of a DSP and a microprocessor, a plurality of microprocessors, one or more microprocessors in conjunction with a DSP core, or any other such configuration.

In some embodiments, the one or more processors may be shared by multiple circuits (e.g., the preconditioning circuit 220 and/or the SOC expansion circuit 230 may comprise or otherwise share the same processor which, in some example embodiments, may execute instructions stored, or otherwise accessed, via different areas of memory). Alternatively or additionally, the one or more processors may be structured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure.

The memory device 214 (e.g., memory, memory unit, storage device) may include one or more devices (e.g., RAM, ROM, Flash memory, hard disk storage) for storing data and/or computer code for completing or facilitating the various processes, layers and modules described in the present disclosure. For example, the memory device 214 may include dynamic random-access memory (DRAM). The memory device 214 may be communicably connected to the processor 212 to provide computer code or instructions to the processor 212 for executing at least some of the processes described herein. Moreover, the memory device 214 may be or include tangible, non-transient volatile memory or non-volatile memory. Accordingly, the memory device 214 may include database components, object code components, script components, or any other type of information structure for supporting the various activities and information structures described herein.

The communications interface 250 may include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and out-of-vehicle communications (e.g., with a remote server). For example, and regarding out-of-vehicle/system communications, the communications interface 250 may include an Ethernet card and port for sending and receiving data via an Ethernet-based communications network and/or a Wi-Fi transceiver for communicating via a wireless communications network. The communications interface 250 may be structured to communicate via local area networks or wide area networks (e.g., the Internet) and may use a variety of communications protocols (e.g., IP, LON, Bluetooth, ZigBee, radio, cellular, near field communication).

As shown in FIG. 2, the communications interface 250 may enable communication with the fuel system 120, the engine 130, the one or more sensors 150, and/or the operator I/O device 160.

The preconditioning circuit 220 is configured to receive information from one or more components of the system 100 to increase or maximize energy storage of the system 100 (e.g., a vehicle). Specifically, the preconditioning circuit 220 may be configured to cause a SOC of one or more energy storage devices (e.g., the battery 110) of the system 100 to increase while the system 100 approaches a fueling point (e.g., an infrastructure station, a refueling station) at which one or more of the fuel tanks 125 may be filled or refilled. The SOC of the battery 110 may increase by preconditioning, by the preconditioning circuit 220, one or more fuel tanks for refilling. Preconditioning the fuel tanks may include converting, by the preconditioning circuit 220, remaining fuel in a fuel tank 125 into electrical energy usable by the battery 110. This may cause one or more fuel tanks 125 to be as empty as possible upon arrival at a refueling station.

A situation in which an empty or near-empty fuel tank 125 is removed from the system 100 and swapped with a full fuel tank 125, causing the fuel tank 125 to be as empty as possible, may reduce an amount of fuel that is given away (e.g., removed from or not utilized by the vehicle), thus reducing costs. Additionally, converting fuel energy to electrical energy (i.e., battery power) may increase a charge on the battery 110, thus increasing an overall amount of energy (and, therefore, an overall range) of the system 100 when an empty fuel tank 125 becomes full.

The preconditioning circuit 220 may receive information regarding current location of the system 100. The information regarding the current location of the vehicle may be received from, for example, a GPS unit, a telematics unit, one or more of the sensors 150, etc. The preconditioning circuit 220 may also receive data about the operation of the vehicle, such as a current speed of the vehicle, an acceleration of the vehicle, a current route of the vehicle, future routes of the vehicle, a mission of the vehicle, etc. As used herein, a "mission" of a vehicle refers to an origin location or current location of the vehicle, a destination of the vehicle, and a path between the origin/current location and the destination. In other words, the mission refers to the path or route between two or more points. In some embodiments, the "mission" includes a time constraint that affects how far the vehicle can travel within the mission (e.g., a maximum time allotted for the vehicle to reach a desired location, such as a destination).

In various embodiments, the preconditioning circuit 220 may receive information about a route of the system 100. For example, the preconditioning circuit 220 may receive information about a distance until an end of a current route, information about a shift of a driver of the system 100 (e.g., start and end times of a shift), information about an allotted amount of drive time for the driver, and/or information about a distance until a depot or rest stop is reached.

In various embodiments, the preconditioning circuit 220 may further determine a location of one or more infrastructure stations. In some embodiments, an infrastructure station may be a station, point, location, etc. where the system 100 is able to replenish supplies. For example, an infrastructure station may be a fueling or refueling station. A refueling station may be, for example, a location at which the system 100 is able to replenish a fuel level or fuel supply, charge the battery 110, etc. Reference is made herein to "refueling stations." It should be understood that the scope of this disclosure is not limited to refueling stations and may include any infrastructure station.

In various embodiments, the preconditioning circuit 220 may determine and/or receive an indication of (e.g., by a sensor 150) a location of one or more refueling stations near the system 100. For example, based on a current location of the system 100, the preconditioning circuit 220 may determine locations of one or more refueling stations within a predefined distance of the system 100 (e.g., within a predefined radius, etc.). In various embodiments, the preconditioning circuit 220 may determine locations of one or more refueling stations along a current route of the system 100. The preconditioning circuit 220 may determine the locations of refueling stations within a predefined distance of the route of the system 100. For example, the preconditioning circuit 220 may identify and determine refueling stations within a one-mile radius of the route to reduce or minimize an amount of time and/or distance a driver of the system 100 spends off of the route to refuel the system 100.

Upon determining the current location of the vehicle and a location of one or more refueling stations, the preconditioning circuit 220 may determine or receive an indication of a distance between the current location of the system 100 and the location of a refueling station. Specifically, the preconditioning circuit 220 may determine a distance between the current location of the system 100 and a location of a desired refueling station (e.g., a refueling station the system 100 is scheduled, planned, or expected to stop at). For example, the system 100 may plan to stop at the next refueling station along the route of the system 100.

The preconditioning circuit 220 may further determine that a current location of the system 100 is within a predefined distance of a refueling station. For example, the preconditioning circuit 220 may determine that the system 100 is within 20 miles of a refueling station. The determination may be indicative that the system 100 may refill a fuel tank at the refueling station and that one or more fuel tanks may be preconditioned to prepare for refueling, refilling, replacement, etc.

Based on the current location of the system 100 and a location of a refueling station (e.g., a refueling station that the system 100 will refuel at), the preconditioning circuit 220 may determine or receive (e.g., from the sensors 150) an indication of an amount of energy to be utilized by the system 100 to arrive at the refueling station. In various embodiments, the preconditioning circuit 220 may estimate, predict, calculate, or otherwise determine the amount of energy expected to be utilized, needed, or likely needed for the system 100 to arrive at the refueling station. The preconditioning circuit 220 may determine the amount of energy using factors such as a distance to the refueling station, traffic conditions, route conditions, road conditions, terrain, etc. For example, the distance to the refueling station may be 20 miles. However, depending on various road and/or traffic conditions, the energy used to travel the 20 miles may differ. For example, 20 miles on a flat, smooth road may utilize a certain amount of energy (e.g., 50% of a remaining energy level of the vehicle), while 20 miles on an uphill route with heavy traffic may utilize a greater amount of energy (e.g., 80% of the remaining energy level of the vehicle), and 20 miles on a downhill route with no traffic may utilize less energy (e.g., 40% of the remaining energy level of the vehicle). The energy determined to be utilized to arrive at the refueling station may be expressed as a percentage of a total amount of energy available to the system 100, an amount of fuel available to the system 100, an amount of battery power available to system 100, etc.

The preconditioning circuit 220 may determine or receive an indication of and/or data indicative of the SOC of the battery 110 of the system 100. The preconditioning circuit 220 may determine the SOC of the battery, for example, via sensor data transmitted from the sensor 150. In various embodiments, the battery 110 transmits battery life information to the preconditioning circuit 220. The SOC of the battery 110 may indicate a remaining capacity of the battery to power the system 100. The SOC may be measured in, for example, time remaining (e.g., two hours of driving until battery depletion), mileage remaining, voltage remaining, a percentage of the battery remaining, etc. The preconditioning circuit 220 may determine or receive an indication that the SOC of the battery 110 is at or below a predefined threshold value. This may indicate that the battery 110 may have the SOC increased by preconditioning the fuel tanks to convert energy into electrical energy usable by the battery 110.

The preconditioning circuit 220 may further be configured to determine a fuel level of and/or receive, from the sensors 150, data indicative of a fuel level of each fuel tank 125 of the fuel system 120. As the system 100 travels, the system 100 may consume fuel. The system 100 may utilize multiple fuel tanks 125 in various combinations for a single route. For example, the system 100 may use a first, a second, and a third fuel tank 125 at various points during a route or travel time. Thus, the fuel tanks 125 may contain varying levels of fuel. A level of fuel may be expressed as, for example, a percentage of fuel remaining, a volume of fuel remaining, etc. For example, at a certain point in time, the first fuel tank 125 may have 50% fuel remaining, the second fuel tank 125 may have 80% fuel remaining, and the third fuel tank 125 may have 20% fuel remaining.

In various embodiments, the system 100 may deplete each fuel tank 125 in series. For example, the system 100 may use the entirety of the first fuel tank (e.g., until the first fuel tank has, for example, 3% fuel remaining) and, responsive to depletion of the first fuel tank 125, begin using the second fuel tank. In various embodiments, the preconditioning circuit 220 may determine that and/or receive data indicating that a fuel level is at or below a predefined threshold level. This may indicate that the fuel tank may be preconditioned (e.g., remaining fuel may be converted into electrical energy used by the battery 110).

In various embodiments, one or more fuel tanks 125 may be emptied as the system 100 approaches a refueling station. Emptying one or more fuel tanks 125 may include, for example, venting residual contents of the fuel tank to the atmosphere, transferring the contents of the fuel tank into one or more other designated fuel tanks 125 on the system 100, converting fuel to electrical energy (e.g., battery power), etc. A fuel tank 125 may be emptied and/or switched out due to, for example, regulatory reasons (e.g., entering and/or exiting a region with varying regulatory laws), accordance with fleet emission targets and/or tracking, fuel type differences, and/or an inability of the system 100 to properly operate using a current blend of fuels in the fuel system 120. Emptying a fuel tank 125 may prepare the fuel tank 125 for refueling, refilling, replacement, etc.

In various embodiments, the controller 140 may determine that a fuel tank 125 is to be refilled responsive to a fuel level being at or below a predefined threshold value. For example, responsive to a fuel level of the fuel tank 125 being at or below 5%, the controller 140 may determine that the fuel tank is empty or substantially empty and is to be refilled.

In various embodiments, a system 100 may refill one or more fuel tanks 125 at a refueling station. For example, at the refueling station, an empty, partially empty, substantially empty, etc. fuel tank 125 may be refilled or replenished so that the fuel level is at or above a predefined threshold value. For example, a fuel tank 125 may be refilled until the fuel level is at or above 97%. In various other embodiments, an empty, substantially empty, partially empty, etc. fuel tank 125 may be swapped out for a full fuel tank. That is, an empty fuel tank 125 may be removed from the system 100 and swapped with a full fuel tank 125. This may reduce an amount of time a driver of the system 100 is stopped at a refueling station and is not traveling on a route.

As such, in various embodiments, the preconditioning circuit 220 may cause one or more partially full fuel tanks 125 to be consumed prior to arriving at or entering a refueling station or depot, such that the one or more partially full fuel tanks 125 are empty or substantially empty upon arrival at a refueling station. The now-substantially empty fuel tank(s) 125 may be swapped with or replaced by one or more full or substantially full fuel tanks 125. For example, the preconditioning circuit 220 may determine that one fuel tank 125 on board the system 100 has a fuel level less than a threshold value (e.g., less than 10%, etc.) and, in some embodiments, may also determine that the system 100 (e.g., vehicle) is within a threshold distance of a refueling station. The preconditioning circuit 220 may then determine that the fuel tank 125 should be depleted prior to arrival at the refueling station. Depleting the fuel tank 125 may boost a SOC of the batter 110. Methods of depleting the fuel tank 125 are described in greater detail herein.

Upon depleting the fuel tank 125, the now-empty fuel tank 125 may be swapped out with or replaced with a full fuel tank 125. For example, the now empty fuel tank 125 may be removed from the system 100 and replaced with a fuel tank 125 having a fuel level at or above a threshold value (e.g., greater than or equal to 97% full, etc.). The full fuel tank may be retrieved from the refueling depot, and the empty fuel tank may be left at the refueling depot.

As a specific example, a partially full hydrogen fuel tank 125 may have a certain amount of hydrogen fuel remaining in the tank (e.g., at or below a predefined threshold value or amount). The hydrogen fuel may be consumed (e.g., converted into electrical energy) to increase a SOC of the battery 110 before entering a refueling depot (e.g., a hydrogen fuel refueling depot). The now-depleted hydrogen fuel tank 125 may be swapped out or replaced with a full or substantially full hydrogen fuel tank 125. This may at least partly enable hydrogen-powered internal combustion engines, particularly in on-highway environments or applications.

In order to increase or maximize an amount of energy of the system 100 after leaving a refueling station, the preconditioning circuit 220 may convert energy stored on the system 100 from a first form to a second form. For example, the preconditioning circuit 220 may convert energy stored as fuel in a fuel tank 125 to energy stored as electrical energy for use the battery 110. Converting energy from the first state to the second state may increase or maximize the amount of energy of the system 100 (and, therefore, increasing a range of the system 100) by increasing a battery charge of the battery 110 using fuel on the vehicle. For example, at a refueling station, no charging station may be available for the battery 110. Thus, in some embodiments, the system 100 may arrive at a refueling station to refill the fuel tanks 125 and leave the refueling station with full fuel tanks 125 but a partially depleted battery 110, meaning the system 100 is not maximally storing energy. In various embodiments, the controller 140 may control one or more components of the system 100 such that the system 100 does not leave a refueling station without the battery SOC being full and at least one fuel tank 125 being full.

Further, converting energy from the first state to the second state may increase or maximize the amount of energy by reducing an amount of unused energy removed from the system 100 during refueling or swapping of the fuel tanks 125. For example, upon nearing arrival to a refueling station, a fuel tank 125 may have 20% fuel remaining. Upon swapping the fuel tank (e.g., for a fuel tank having 100% fuel remaining), the vehicle may "give away" the remaining 20% of fuel for free by not utilizing the fuel before removing the tank from the vehicle, thereby losing fuel that could have otherwise been utilized. However, a fuel tank having 3% fuel remaining may be swapped, and less fuel is "given away" relative to swapping out a fuel tank with 20% fuel remaining. Thus, it may be beneficial to the driver, the system 100, a company owning the system 100, etc. to convert any fuel that may not be used as fuel prior to a refueling point into a form of energy usable by the system 100. As such, the preconditioning circuit 220 may be configured to convert remaining fuel into energy for use by the battery 110 of the system 100 to increase or maximize an amount of energy stored on the system 100 upon leaving a refueling station.

The preconditioning circuit 220 may determine that the system 100 is to be refueled within a predetermined time period or distance. For example, the preconditioning circuit may receive, for example by telematics data, an indication that a first refueling station is upcoming in 20 miles, and the next refueling station after the first refueling station is 300 miles further along the route. The preconditioning circuit 220 may determine, based on, for example, current fuel levels and/or current battery SOCs, that the system 100 will refuel at the station upcoming in 20 miles. In various embodiments, the preconditioning circuit 220 may receive an indication that the system 100 will refuel. For example, the preconditioning circuit 220 may receive the indication from the driver of the system 100 via the operator I/O device 160.

Responsive to receiving an indication and/or determining that the system 100 will refuel within a predefined time period or distance, the preconditioning circuit 220 may determine whether the fuel system 120 is to be preconditioned for refueling. That is, the preconditioning circuit 220 may determine whether one or more fuel tanks 125 should have energy (e.g., fuel) converted into a different form of energy (e.g., battery power) prior to arrival at the refueling station.

The preconditioning circuit 220 may manage fuel tank levels and/or battery SOC based on the detection of one or more rest stops (e.g., based on a planned amount of time to be spent at a rest stop). In operation, the system 100 may stop at a rest stop (e.g., a location where refueling does not occur). The preconditioning circuit 220 may make one or more determinations regarding the energy levels (e.g., the fuel levels and/or battery SOC levels) of the system 100 prior to the system 100 arriving at a rest stop, during a duration of a stop of the system 100 at the rest top, and/or in preparation for the system 100 to depart the rest stop (e.g., in preparation for the system 100 resuming the route). For example, the preconditioning circuit 220 may determine whether a fuel tank is to be refilled, whether a fuel tank is to be replaced, whether a battery is to be recharged, etc. at an upcoming refueling station.

A stop at a rest stop may affect any of the one or more determinations (and/or received indications) made by the preconditioning circuit 220 described above. For example, the system 100 stopping at a rest stop may cause the system 100 to utilize more energy than if the system 100 did not stop at a rest stop. Additionally, the system 100 stopping at a rest stop may affect a time of arrival at a refueling station (e.g., the system 100 may arrive at a refueling station later than if the system 100 did not stop at the rest stop) and/or may cause the system 100 to be able to spend less time at the refueling station (e.g., in order to arrive at a destination on time). The preconditioning circuit 220 may then determine that one action should be taken over another to save time or keep the system 100 on schedule. For example, the preconditioning circuit 220 may determine that a fuel tank 125 should be swapped rather than refilled in order to spend less time at the refueling station.

Responsive to determining that one or more fuel tanks should have fuel converted into electrical energy, the preconditioning circuit 220 may determine which of the fuel tanks 125 should be converted. The preconditioning circuit 220 may determine that a fuel tank 125 is to have stored fuel converted responsive to a determination that the fuel in the fuel tank 125 can be utilized as another form of energy for the system 100. The preconditioning circuit 220 may determine whether the fuel can be utilized as another form of energy based on, for example, current fuel levels, a current battery SOC, a distance to a refueling station, etc. In various embodiments, the preconditioning circuit 220 may utilize an algorithm to determine whether a fuel tank is to have its fuel converted into electrical energy. The algorithm will be described in additional detail below.

As discussed previously, the fuel system 120 may include fuel tanks 125 having a plurality of different fuel types (e.g., diesel, natural gas, gasoline, hydrogen, etc.). The operator of the system 100 and/or the preconditioning circuit 220 may determine an order in which the different types of fuel should be consumed or converted in order to fully charge the SOC prior to refueling the system 100. For example, certain fuel types may be better for converting to electrical energy than other fuel types.

Thus, the preconditioning circuit 220 may determine an order that the fuel types should be utilized to increase or maximize an amount of charge the battery receives from the fuel conversion. For example, the preconditioning circuit 220 may configure the fuel system 120 so that a fuel tank 125 storing diesel is used first, and the diesel fuel is all used for powering the vehicle. The preconditioning circuit 220 may configure the fuel system 120 so that a fuel tank 125 storing hydrogen fuel is used second, so that any hydrogen fuel that remains in the fuel tank 125 can be converted to power the battery 110 as the system 100 approaches a refueling station.

In various embodiments, the preconditioning circuit 220 may determine whether a fuel tank 125 is to be refilled or swapped out with a new, full or substantially full tank. The preconditioning circuit 220 may utilize an algorithm to determine whether a fuel tank is to be refilled or swapped. Further, the preconditioning circuit 220 may utilize the algorithm to determine which fuel tank should be emptied first (e.g., which fuel tank should be used to power the vehicle, which fuel tank should be used to convert fuel to electrical energy, etc.). The algorithm may utilize, as inputs, one or more of an amount of time and/or distance to a refueling station, the route of the vehicle, a schedule of the vehicle (e.g., whether the vehicle is scheduled to be at a certain location at a specific time and/or whether the vehicle is on time), a number of hours worked by the driver of the vehicle and/or a number of hours allotted to be worked by the driver.

The algorithm may also use, as inputs, one or more of a predicted energy consumption between a current location of the vehicle and the location of the fueling station, a predicted energy consumption to complete a mission of the vehicle (e.g., a route, a shift, etc.), time available for a refueling event, a cost to refill the tank(s) versus a cost to replace or swap the tank(s), and/or historical data. Historical data may include, for example, whether the truck has previously operated on the route, previous refueling stations, previous decisions of whether a tank is replaced or refilled, previous amounts of time to complete refueling, etc.

The algorithm may additionally or alternatively utilize, as inputs, fault codes. For example, the battery 110 may experience a fault code. The algorithm may use the information to determine that fuel should not be converted into energy to be used by the battery 110 because the fault code indicates that the battery 110 would be unable to utilize the converted energy.

Further, the algorithm may use, as inputs, predicted changes in energy. For example, the preconditioning circuit 220 may calculate an expected or predicted amount of energy to be gained from sources other than, for example, fuel and/or battery power. For example, the system 100 may be traveling on a downhill and may perform regenerative engine braking in 20 miles. The preconditioning circuit 220 may calculate an expected or predicted energy consumption between the current location of the vehicle and the refueling station, and the preconditioning circuit 220 may also calculate an expected or predicted energy gain from the downhill travel.

As described herein, the preconditioning circuit 220 may convert energy from, for example, energy stored as fuel to energy stored as battery power. In various embodiments, the range limits of the battery 110 may be expanded. For example, the battery SOC may be expanded in situations where a refueling station is beyond a predefined distance (e.g., beyond a range of the system 100) and the system 100 may need an extended range to be able to reach the refueling station. The SOC expansion circuit 230 may convert fuel to battery power such that an upper limit of the state of charge of the battery 110 is slightly expanded.

In various embodiments, "expanding" the limits of the battery SOC may mean switching from a first set of range limits to a second set of range limits having a greater upper limit and/or a lesser lower limit. Expanding the SOC range may allow for an extended range of the system 100. For example, an absolute maximum upper limit of the battery SOC may be 98%. During normal charging operations, the battery 110 may be charged to 95%. In various embodiments, the SOC expansion circuit 230 may adjust the SOC range limits such that the preconditioning circuit 220 may convert fuel to battery power so that the battery 110 is charged to 97%.

The SOC expansion circuit 230 may temporarily "flex" the SOC limit of the battery 110. The "temporary" adjustment may be based on at least one of a time or other operating unit of measure (e.g., distance). The "temporary" adjustment may be a relatively momentary (e.g., less than a few minutes or miles) adjustment to a predefined operating characteristic. For example, the SOC expansion circuit 230 may temporarily increase a limit (e.g., an upper limit) of the SOC of the battery 110 based on one or more operating conditions of the system 100. For example, the SOC expansion circuit 230 may receive or determine data indicative of a fuel tank pressure of each of the one or more fuel tanks 125 and/or a fuel tank fill percentage of each of the one or more fuel tanks 125. Based on this data (e.g., that a fuel tank pressure and/or fuel tank fill percentage is below a threshold value), the SOC expansion circuit 230 may temporarily increase the limit of the SOC of the battery 110. In some embodiments, the SOC expansion circuit 230 may additionally or alternatively increase the limit of the SOC of the battery 110 based on the SOC of the battery 110 and/or a distance from a current location of the system 100 to a refueling station.

Additionally or alternatively, the SOC expansion circuit 230 may adjust the SOC range limits such that the preconditioning circuit 220 may convert fuel to battery power so that a lower limit of the state of charge of the battery 110 is slightly expanded. For example, an absolute minimum lower limit of the battery SOC may be 3%. During normal operation, the battery 110 may be utilized until 5% of the battery life remains. In various embodiments (i.e., when the battery 110 is operating with an extended range), the battery 110 may be utilized until 4% of the battery life remains. Thus, the SOC expansion circuit 230 may adjust the SOC limits so that the preconditioning circuit 220 may begin converting fuel to battery power responsive to the batter power being at 4% rather than 5%.

In various embodiments, expansion of the battery SOC limits may be used selectively and/or temporarily, for example, in situations where an extended battery SOC range is useful and/or needed. For example, the system 100 may stop at a refueling station to refill the fuel tanks 125 and/or recharge the battery 110. For example, the preconditioning circuit 220 and/or the SOC expansion circuit 230 may determine that the next refueling station is 300 miles from the current refueling station. This determination may be made automatically, for example by the controller 140 (e.g., using route information, telematics data, GPS data, etc.).

In various other embodiments, the determination may be made by a driver of the system 100. For example, the driver may communicate information about a distance to a subsequent refueling station to the controller 140 via the operator I/O device 160. The determination to expand the battery SOC limits may be performed prior to arriving at a refueling station. For example, the system 100 may arrive at a first refueling station in 20 miles. The SOC expansion circuit 230 may receive an indication that the next refueling station is 300 miles beyond the first refueling station. Thus, at a time prior to arriving at the first refueling station (e.g., a final opportunity to refuel and/or recharge the system 100 before the station 300 miles away), the SOC expansion circuit 230 may determine that the battery SOC limits are to be expanded, and the SOC expansion circuit 230 may perform the expansion. For example, the SOC expansion circuit 230 may switch the SOC limits from a first set of parameters to a second set of parameters.

In various embodiments, the SOC expansion circuit 230 may expand the SOC limits at or around a time that preconditioning of the system 100 begins (e.g., when fuel is converted to battery power by the preconditioning circuit 220) so that the converted fuel can be used to charge the battery 110 to the extended upper limit.

In various embodiments, the SOC expansion circuit 230 may determine whether the battery SOC is to be expanded. The determination of whether an extended battery SOC is utilized may be based on, for example, a route of the vehicle, a mission of the vehicle, and/or an availability, type, and/or cost of fuel(s) along the route. For example, the extended battery SOC may be utilized, permitted to be utilized, etc. when a destination is within a predefined threshold distance and/or when a refueling station is beyond a predefined threshold distance.

Responsive to a determination that the extended battery SOC is to be utilized, the SOC expansion circuit 230 may determine a value by which the battery SOC is to be expanded. This determination may be based on, for example, a predicted distance the system 100 is to travel before refueling, an amount of fuel available to be converted into battery energy, etc. Therefore, the value by which the battery SOC is expanded may be a dynamic value. The SOC expansion circuit 230 may increase the upper and/or lower limits of the battery 110 SOC during preconditioning of the system 100 (e.g., while converting fuel into battery power). In various embodiments, the SOC range may be extended by a predetermined value. For example, the SOC expansion circuit 230 may alter the SOC range from a first set of parameters where the upper limit is 95% to a second set of parameters where the upper limit is 97%, regardless of a distance of the system 100 from a refueling station or any other parameter.

The SOC expansion circuit 230 may cause the system 100 to operate in an altered state relative to a standard or "normal" operating condition when the battery SOC is expanded. It may be beneficial to operate the system 100 in the expanded SOC state for a reduced or minimum amount of time and/or distance, in order to protect the battery 110. Operating the system 100 in an altered state may be, for example, configuring the system 100 so that electrical energy (i.e., the battery 110) initially powers the system 100 after exiting the refueling station, rather than using fuel, in order to reduce or minimize the amount of time that the battery 110 is operating with an expanded range.

In various embodiments, the SOC expansion circuit 230 may predict or otherwise determine a distance and/or length of time the vehicle travels before the battery SOC falls within normal limits. For example, the battery may be extended to be charged to 97%, and a normal upper SOC limit may be 95%. The SOC expansion circuit 230 may predict or determine that the battery range will fall to 95% after the system 100 has operated for five miles. The SOC expansion circuit 230 may modify operation of the engine 130 to reduce or minimize the time and/or distance it takes for the battery range to fall at 95% or below.

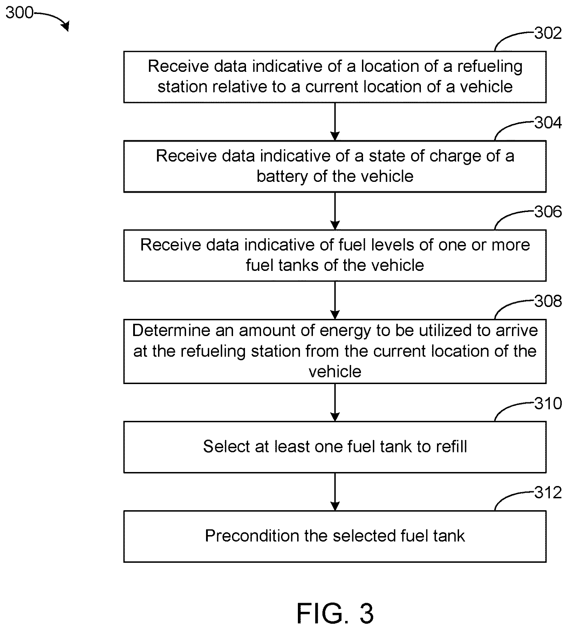

Now referring to FIG. 3, a flow diagram of a method 300 of improving or maximizing energy storage is shown, according to an example embodiment. In some embodiments, the controller 140, or a component thereof, such as the preconditioning circuit 220, is structured to perform the method 300 alone, or in combination with one or more components/systems of the system 100.

At process 302, the preconditioning circuit 220 receives data indicative of a location of a refueling station relative to a current location of a vehicle (e.g., the system 100). The preconditioning circuit 220 may receive the data from, for example, a sensor (e.g., the sensor 150), GPS data, telematics data, etc. At process 302, the preconditioning circuit 220 may further determine that the vehicle is within a predefined distance of the refueling station. For example, the preconditioning circuit 220 may receive, from a sensor, or determine location data indicating a current location of the vehicle. The preconditioning circuit 220 may also receive, from a sensor, or otherwise determine and/or receive an indication of a location of a refueling station (e.g., a closest refueling station). The preconditioning circuit 220 may determine or receive data indicative of a distance to the refueling station from the current location of the system 100.

At process 304, the preconditioning circuit 220 receives an indication of and/or data indicative of the state of charge of a battery of the vehicle. The preconditioning circuit 220 may receive the data indicative of state of charge of the battery (e.g., the battery 110) responsive to, for example, a determination at process 302 that the current location of the vehicle is within a predefined distance of the refueling station. The preconditioning circuit 220 may receive the data indicative of the state of charge of the battery from the sensors 150.

The state of charge of the battery may indicate an amount of electrical energy available to power the system 100 using the battery 110. The state of charge of the battery may indicate a range (e.g., a distance, a number of miles, kilometers, etc.) available for the vehicle to travel before the battery power is depleted. For example, at process 304, the preconditioning circuit 220 may receive an indication of and/or data indicative of a SOC of the battery 110 (e.g., 50%). The preconditioning circuit 220 may determine that the SOC is at or below a threshold value indicating that the battery is to be recharged.

At process 306, the preconditioning circuit 220 receives an indication of and/or data indicative of the fuel level of each fuel tank of one or more fuel tanks of the vehicle. The preconditioning circuit 220 may receive the data indicative of fuel level of each fuel tank responsive to a determination that the state of charge of the battery is at or below a predefined threshold value. The preconditioning circuit 220 may receive the data indicative of the fuel level of each fuel tank from the sensors 150. For example, when the SOC of the battery is at or below the predefined threshold value, the preconditioning circuit 220 may receive or determine fuel levels and/or data indicative of the fuel tanks 125 to determine which, if any, fuel tanks have fuel that can be converted into electrical energy to power the battery 110.

The preconditioning circuit 220 may determine that a fuel tank 125 has fuel that can be converted to electrical energy based on, for example, the fuel level being at or below a predefined threshold value. Further, an algorithm, described above with respect to FIG. 2, may be used to determine which fuel tank(s), if any, are to be refilled, preconditioned, and/or replaced.

At process 308, the preconditioning circuit determines an amount of energy to be utilized by the vehicle to arrive at the refueling station from the current location of the vehicle. For example, the preconditioning circuit 220 may predict, estimate, or determine an amount of energy needed to travel from the current location of the vehicle to a refueling station.

At process 310, the preconditioning circuit 220 selects at least one of the one or more fuel tanks to refill. The preconditioning circuit 220 may select the at least one fuel tank to refill based on at least one or more of the location of the refueling station, the state of charge of the battery, the fuel level(s) of the fuel tank(s), and/or the determined amount of energy to be utilized to arrive at the refueling station. For example, the preconditioning circuit 220 may determine that the vehicle is within a predetermined distance of the refueling station, the state of charge of the battery is at or below a predefined threshold value, a fuel tank has a fuel level at or below a predefined threshold value such that the fuel tank can be preconditioned and/or refilled, and that the vehicle is estimated to utilize a certain amount of energy to travel from the current location to the refueling station.

A fuel tank may be selected to be preconditioned, refilled, and/or replaced responsive to a determination that the fuel level of the fuel tanks is at or below a predefined threshold value. Further, process 310 may include selecting the at least one fuel tank (e.g., to be refilled, replaced, preconditioned, etc.,) based on an order in which the one or more fuel tanks are emptied (e.g., have fuel energy converted into electrical energy). As such, the method 300 may further include determining, by the preconditioning circuit 220, an order in which the one or more fuel tanks are emptied.

In various embodiments, the fuel tank to be refilled may be selected based on a type of fuel in the fuel tank. For example, a fuel tank housing hydrogen fuel may be selected to be preconditioned and refilled, while a fuel tank housing diesel fuel may not be selected to be preconditioned and/or refilled.

In various embodiments, the preconditioning circuit 220 selects at least one of the one or more fuel tanks to be preconditioned (e.g., rather than refilled). For example, the preconditioning circuit 220 may select at least one of the one or more fuel tanks to be preconditioned based on at least one or more of the location of the refueling station, the state of charge of the battery, the fuel level(s) of the fuel tank(s), and/or the determined amount of energy to be utilized to arrive at the refueling station.

At process 312, the preconditioning circuit 220 preconditions the selected at least one fuel tank for refilling. The preconditioning circuit 220 may precondition the selected fuel tank responsive to selecting the fuel tank (e.g., at process 310). Preconditioning the selected fuel tank may include converting the fuel from a first form of energy into a second form of energy. In various embodiments, the fuel may be converted from fuel energy into electrical energy to power the battery or otherwise increase a state of charge of the battery. In various embodiments, the fuel tank may be preconditioned prior to the vehicle arriving at the refueling station.

In various embodiments, the preconditioning circuit 220 communicates instructions (e.g., to a user via a user interface of the system 100) to refill the selected fuel tank. For example, the preconditioning circuit 220 may generate and/or transmit an indication or notification, to be displayed on a user interface of the system 100, that the selected tank is to be refilled (e.g., at the next refueling station). In various embodiments, the preconditioning circuit 220 communicates instructions (e.g., to the user via a user interface of the system 100) to replace the selected fuel tank with a new fuel tank having a fuel level being at or above a predefined threshold level. For example, the preconditioning circuit 220 may transmit an indication, to be displayed on a user interface of the system 100, that the selected tank is to be replaced with a new fuel tank having a fuel level at or above a predefined threshold level (e.g., at or above 95% filled).

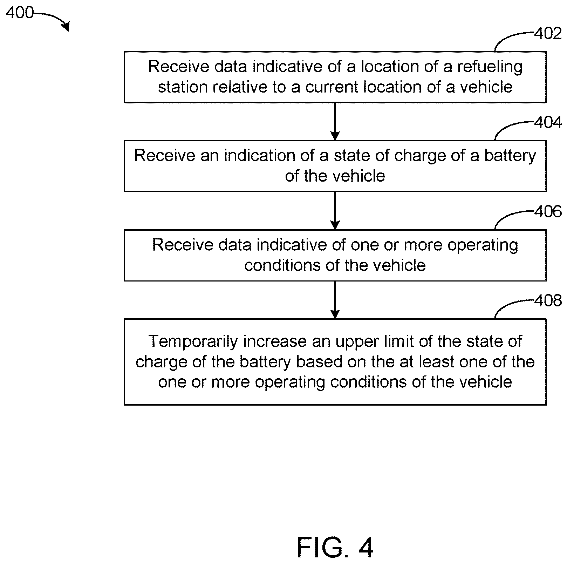

Now referring to FIG. 4, a flow diagram of a method 400 of controlling a state of charge of a battery of a vehicle is shown, according to an example embodiment. In some embodiments, the controller 140, or a component thereof, such as the state of charge expansion circuit 230, is structured to perform the method 400 alone, or in combination with one or more components/systems of the system 100.

At process 402, the state of charge expansion circuit 230 determines or receives an indication of a state of charge of a battery of the system 100. In some embodiments, the preconditioning circuit 220 may determine or receive an indication of the state of charge of the battery of the system 100 and transmit the SOC information to the state of charge expansion circuit 230.

At process 404, the state of charge expansion circuit 230 receives data indicative of a location of a refueling station relative to a current location of a vehicle (e.g., the system 100). The state of charge expansion circuit 230 may receive the data from, for example, a sensor (e.g., the sensor 150), GPS data, telematics data, etc. In some embodiments, the preconditioning circuit 220 may determine or receive the data indicative of a location of a refueling station relative to a current location of the system 100 and transmit the SOC information to the state of charge expansion circuit 230.

At process 406, the state of charge expansion circuit 230 receives data indicative of one or more operating conditions of the vehicle. The one or more operating conditions of the vehicle may include a fuel tank pressure of each of the one or more fuel tanks and/or a fuel tank fill percentage of each of the one or more fuel tanks.

At process 408, the state of charge expansion circuit 230 temporarily increases an upper limit of the state of charge of the battery based on the at least one of the one or more operating conditions of the vehicle. In some embodiments, the state of charge expansion circuit 230 temporarily increases the upper limit of the state of charge of the battery based on the data indicative of a location of a refueling station relative to a current location of the vehicle that is determined by the state of charge expansion circuit 230 at process 404.

In some embodiments, the state of charge expansion circuit 230 temporarily decreases a lower limit of the state of charge of the battery based on at least one of the one or more operating conditions of the vehicle. The state of charge expansion circuit 230 may then determine that the state of charge of the battery is less than or equal to the lower limit (e.g., the decreased lower limit) and replenish the state of charge of the battery responsive to the determination, using fuel from the one or more fuel tanks. For example, the state of charge expansion circuit 230 may convert fuel from at least one of the fuel tanks from a first form of energy (e.g., fuel energy) to a second form of energy (e.g., electrical or battery energy).

Flexing the SOC of the battery may allow for a variety of advantages. For example, the controller 140 may determine that a refueling station for the fuel system 120 is more than a predefined distance from a current location of the vehicle. As a result, the controller may temporarily increase the SOC limit of the battery 110 to enable more charge to be received and, in turn, enable the vehicle to be powered longer by the battery to reach the refueling station, if needed. As another example, the controller 140 may determine that the next charging station is more than a predefined distance and/or time (estimated) away from a current location of the vehicle and increase the SOC upper limit to enable more charge to be received in anticipation of the further distance and/or time to the charging station. As yet another example, by flexing the upper SOC upper limit, the controller 140 may account for the fuel tank pressure and/or level being at or below a predefined threshold, which may indicate that the fuel amount is insufficient or potentially insufficient to reach a desired destination or perform a desired mission. Increasing the SOC upper limit may enable the battery to deliver more power for a longer duration to meet that mission goal. Thus, controller 140 may provide several advantages by flexing the SOC of the battery.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "example" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members.

If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A communicably "coupled" to circuit B may signify that the circuit A communicates directly with circuit B (i.e., no intermediary) or communicates indirectly with circuit B (e.g., through one or more intermediaries).

References herein to the positions of elements (e.g., "top," "bottom," "above," "below") are merely used to describe the orientation of various elements in the FIGURES. It should be noted that the orientation of various elements may differ according to other example embodiments, and that such variations are intended to be encompassed by the present disclosure.

While various circuits with particular functionality are shown in FIG. 2, it should be understood that the controller 140 may include any number of circuits for completing the functions described herein. For example, the activities and functionalities of the preconditioning circuit 220 may be combined in multiple circuits or as a single circuit. Additional circuits with additional functionality may also be included. Further, the controller 140 may further control other activity beyond the scope of the present disclosure.

As mentioned above and in one configuration, the "circuits" may be implemented in machine-readable medium for execution by one or more of various types of processors, such as the processor 212 of FIG. 2. Executable code may, for instance, comprise one or more physical or logical blocks of computer instructions, which may, for instance, be organized as an object, procedure, or function. Nevertheless, the executables need not be physically located together, but may comprise disparate instructions stored in different locations which, when joined logically together, comprise the circuit and achieve the stated purpose for the circuit.

Indeed, a circuit of computer readable program code may be a single instruction, or many instructions, and may even be distributed over several different code segments, among different programs, and across several memory devices. Similarly, operational data may be identified and illustrated herein within circuits, and may be embodied in any suitable form and organized within any suitable type of data structure. The operational data may be collected as a single data set or may be distributed over different locations including over different storage devices, and may exist, at least partially, merely as electronic signals on a system or network.

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multi-core processor (e.g., a dual core processor, triple core processor, quad core processor, etc.), microprocessor, etc.

In some embodiments, the one or more processors may be external to the apparatus, for example the one or more processors may be a remote processor (e.g., a cloud based processor). Alternatively or additionally, the one or more processors may be internal and/or local to the apparatus. In this regard, a given circuit or components thereof may be disposed locally (e.g., as part of a local server, a local computing system, etc.) or remotely (e.g., as part of a remote server such as a cloud based server). To that end, a "circuit" as described herein may include components that are distributed across one or more locations.

Embodiments within the scope of the present disclosure include program products comprising computer or machine-readable media for carrying or having computer or machine-executable instructions or data structures stored thereon. Such machine-readable media can be any available media that can be accessed by a computer. The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device. Machine-executable instructions include, for example, instructions and data which cause a computer or processing machine to perform a certain function or group of functions.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present disclosure may be written in any combination of one or more other programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone computer-readable package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the apparatus and system as shown in the various example embodiments is illustrative only. Additionally, any element disclosed in one embodiment may be incorporated or utilized with any other embodiment disclosed herein.

## Claims

1. A vehicle comprising:
a battery;
one or more fuel tanks; and
a controller comprising a memory with instructions stored thereon that, when executed by one or more processors, cause the one or more processors to perform operations comprising:
receiving data indicative of a location of a refueling station relative to a current location of the vehicle;
receiving data indicative of a state of charge of the battery;
receiving data indicative of a fuel level of each fuel tank of the one or more fuel tanks;
determining an amount of energy to be utilized to arrive at the refueling station from the current location of the vehicle;
based on the location of the refueling station, the state of charge of the battery, the fuel level of at least one of the one or more fuel tanks, and the determined amount of energy, selecting at least one fuel tank of the one or more fuel tanks to refill; and
preconditioning the selected at least one fuel tank, wherein preconditioning the selected at least one fuel tank comprises:
converting fuel from the selected at least one fuel tank from a first form of energy to a second form of energy.

2. The vehicle of claim 1, wherein the fuel from the selected at least one fuel tank is converted from fuel to electrical energy so as to increase a state of charge of the battery; and/or
wherein selecting the at least one fuel tank of one or more fuel tanks to refill is further based on a type of fuel in the at least one fuel tank; and/or
wherein a fuel tank is selected to be refilled and preconditioned responsive to a determination that the fuel level is at or below a predefined threshold value.

3. The vehicle of claim 1, wherein the instructions further cause the one or more processors to perform operations comprising:
determining an order in which the one or more fuel tanks is emptied, and wherein selecting the at least one fuel tank of the one or more fuel tanks is further based on the order in which the one or more fuel tanks is emptied; and/or
communicating instructions to refill the selected at least one fuel tank; and/or
communicating instructions to replace the selected at least one fuel tank with a new fuel tank having a fuel level being at or above a predefined threshold level.

4. The vehicle of claim 1, wherein preconditioning the selected at least one fuel tank is performed prior to the vehicle arriving at the refueling station.

5. A vehicle comprising:
a battery;
one or more fuel tanks; and
a controller comprising a memory with instructions stored thereon that, when executed by one or more processors, cause the one or more processors to perform operations comprising:
receiving data indicative of a location of a refueling station relative to a current location of the vehicle;
receiving one or more operating conditions of the vehicle; and
temporarily increasing an upper limit of a state of charge of the battery based on at least one of the one or more operating conditions of the vehicle.

6. The vehicle of claim 5, wherein the one or more operating conditions of the vehicle include a fuel tank pressure of one or more of the fuel tanks or a fuel tank fill amount of one or more of the fuel tanks.

7. The vehicle of claim 5, wherein the upper limit of the state of charge of the battery is temporarily increased based on the data indicative of a location of a refueling station relative to a current location of the vehicle.

8. The vehicle of claim 5, wherein the instructions further cause the one or more processors to perform operations comprising:
temporarily decreasing a lower limit of the state of charge of the battery based on the at least one of the one or more operating conditions of the vehicle.

9. The vehicle of claim 8, wherein the instructions further cause the one or more processors to perform operations comprising:
determining that the state of charge of the battery is less than or equal to the lower limit; and
replenishing the state of charge of the battery responsive to the determination using fuel from the one or more fuel tanks by:
converting fuel from at least one of the one or more fuel tanks from a first form of energy to a second form of energy, wherein the first form of energy is fuel energy and the second form of energy is electrical energy.

10. A method, comprising:
receiving, by one or more processors, data indicative of a location of a refueling station relative to a current location of a vehicle;
receiving, by the one or more processors, data indicative of a state of charge of a battery of the vehicle;
receiving, by the one or more processors, data indicative of a fuel level of one or more fuel tanks of the vehicle;
determining, by the one or more processors, an amount of energy to be utilized to arrive at the refueling station from the current location of the vehicle;
based on the location of the refueling station, the state of charge of the battery, the fuel level of at least one of the one or more fuel tanks, and the determined amount of energy, selecting, by the one or more processors, at least one fuel tank of the one or more fuel tanks to precondition;
preconditioning, by the one or more processors, the selected at least one fuel tank, wherein preconditioning the selected at least one fuel tank comprises:
converting fuel from the selected at least one fuel tank from a first form of energy to a second form of energy; and
communicating, by the one or more processors, instructions to replace the selected at least one fuel tank with a new fuel tank having a fuel level being at or above a predefined threshold level.

11. The method of claim 10, wherein the fuel from the selected at least one fuel tank is converted from fuel to electrical energy so as to increase a state of charge of the battery; and/or
wherein selecting the at least one fuel tank of one or more fuel tanks to precondition is further based on a type of fuel in the at least one fuel tank.

12. The method of claim 10, wherein a fuel tank is selected to be preconditioned and replaced responsive to a determination that the fuel level is at or below a predefined threshold value.

13. The method of claim 10, further comprising determining, by the one or more processors, an order in which the one or more fuel tanks is emptied, and wherein selecting the at least one fuel tank of the one or more fuel tanks is further based on the order in which the one or more fuel tanks is emptied.

14. The method of claim 10, wherein preconditioning the selected at least one fuel tank is performed prior to the vehicle arriving at the refueling station.

15. The method of claim 10, wherein communicating instructions to replace the selected at least one fuel tank comprises:
generating and displaying a notification to an operator of the vehicle.
